# EUROPÄISCHE PATENTSCHRIFT

(11) **EP 0 633 179 B1**
(45) Veröffentlichungstag und Bekanntmachung des Hinweises auf die Patenterteilung: **27.11.1996**
(21) Anmeldenummer: 93110823.7
(22) Anmeldetag: 07.07.1993
(51) Int. Cl.: B62B 9/18

(54) **Federungseinrichtung für ein Kinder- oder Puppenwagengestell**
Suspension for perambulators or carriages for dolls
Dispositif de suspension pour voiture d'enfant ou de poupée

(43) Veröffentlichungstag der Anmeldung: 11.01.1995
(73) Patentinhaber: Hofmann, Christa, D-96224 Burgkunstadt (DE)
(72) Erfinder:
(74) Vertreter: LOUIS, PÖHLAU, LOHRENTZ & SEGETH

(56) Entgegenhaltungen:
- DE-A- 1 780 321
- DE-A- 4 022 369
- DE-C- 850 556
- FR-A- 1 336 872
- GB-A- 680 473
- GB-A- 1 075 866

## Beschreibung

Die Erfindung betrifft eine Federungseinrichtung zur Anordnung zwischen einer Radachse und einer zu dieser parallel vorgesehenen Querstrebe eines Gestellteils eines Kinder- oder Puppenwagengestells.

Eine solche Federungseinrichtung ist bspw. aus der DE 37 26 153 C1 bekannt. Dort ist am Gestellteil bzw. Rahmenelement ein Schwenkarm vorgesehen, der um eine zur Radachse parallele Schwenkachse schwenkbar gelagert ist. Die Radachse erstreckt sich axial unverschiebbar durch den besagten Schwenkarm hindurch. Der Schwenkarm weist im Bereich zwischen der Schwenk- und der Radachse zwei in entgegengesetzte Richtungen weisende Querarme auf, wobei jeder der beiden Querarme an seinem Außenende mit einem Halteteil ausgebildet ist. Zwischen jedem der beiden Halteteile und dem zugehörigen Gestellteil ist ein auf Druck beanspruchbares Federelement angeordnet. Bei dieser bekannten Federungseinrichtung sind also zwei Federelemente vorgesehen, die von außen mehr oder weniger frei zugänglich sind und somit eine gewisse Klemmgefahr bedingen.

Aus der DE 35 26 264 C2 ist eine Federungseinrichtung insbes. für ein Kinderwagengestell oder für eine stationäre Kinderwippe mit seitlichen Rahmenstützen, die mit einem Gelenk und zur Federung der Bewegung der Rahmenstützen um das Gelenk mit einem Federelement versehen sind, bekannt. Diese bekannte Federungseinrichtung weist zur Veränderung der mechanischen Vorspannung des Federelements bzw. zur Einstellung der Härte der Federung eine Einstelleinrichtung auf. Zu diesem Zweck ist die Rahmenstütze außer mit einem Schwingarm auch mit einem Verstrebungselement versehen, wobei die Rahmenstütze, der Schwingarm und das Verstrebungselement miteinander derartig gelenkig verbunden sind, daß sie ein Dreieckgelenk bilden, dessen Basis von der Rahmenstütze und dessen der Basis gegenüberliegende Spitze von der Verbindung des Schwingarms mit dem Verstrebungselement gebildet ist. Der Schwingarm bildet dort einen zweiarmigen Hebel, der an der Rahmenstütze schwenkbar gelagert ist, wobei am einen Endabschnitt des Hebels das Federelement angreift und das Verstrebungselement an dem dem Schwingarm abgewandten Endabschnitt mit der Einstelleinrichtung zur Einstellung der Vorspannung des Federelementes versehen ist. Diese Federungseinrichtung weist also eine Anzahl Konstruktionsteile auf, die miteinander gelenkig verbunden sind, was einen bestimmten Herstellungsaufwand darstellt. Außerdem ist auch hier das Federelement von außen frei zugänglich, so daß eine gewisse Klemmgefahr nicht ausgeschlossen werden kann.

Die DE 32 11 846 A1 offenbart einen Kinderwagen mit einem Scherengestell, wobei jedes der an den unteren Enden der Gestellrohre sitzenden Räder mit seinem Rohr über eine Pufferung verbunden ist, die aus einer am einen Ende geschlossenen Hülse und einem in der Hülse sitzenden Dämpfungsglied mit einer sich innenseitig am geschlossenen Hülsenende abstützenden Spiralfeder besteht, auf der das in das offene Hülsenende hineinragende Ende des betreffenden Gestellrohrs ruht.

Der Erfindung liegt die Aufgabe zugrunde, eine Federungseinrichtung der eingangs genannten Art zu schaffen, mit der eine optimale Federung eines Kinder- oder Puppenwagengestells zwischen der entsprechenden Querstrebe und der zugehörigen Radachse möglich ist, wobei sich die erfindungsgemäße Federungseinrichtung auch zur nachträglichen Anbringung an einem entsprechenden Kinder- oder Puppenwagengestell eignet.

Diese Aufgabe wird erfindungsgemäß dadurch gelöst, daß an der Querstrebe ein Organ befestigt ist, das zur Festlegung eines ersten Befestigungsendes eines Federelementes vorgesehen ist, dessen gegenüberliegendes zweites Befestigungsende an der Radachse festgelegt ist, wobei das Federelement derartig vorgesehen ist, daß es mit einem Anlageabschnitt gegen das Organ gezwängt ist und durch das Organ aus seiner normalen Ruheposition ausgelenkt und hierdurch mechanisch vorgespannt ist. Eine solchermaßen ausgebildete Federungseinrichtung ist auch nachträglich an einem Kinder- oder Puppenwagengestell anordenbar, so daß sich die erfindungsgemäße Federungseinrichtung in vorteilhafter Weise auch zur Nachrüstung eines entsprechenden Kinder- oder Puppenwagengestells eignet. Durch das Organ wird das Federelement also aus seiner ursprünglich geradlinigen Ruhelage ausgelenkt, wodurch sich eine entsprechende Dehnung des Federelementes und folglich ein entsprechendes Federungsverhalten zwischen der Radachse und der zugehörigen Querstrebe des entsprechenden Gestellteils des Kinder- oder Puppenwagengestells ergibt.

Als zweckmäßig hat es sich erwiesen, wenn das Organ spulenförmig mit einem zentralen Hülsenteil, durch das sich die Querstrebe hindurcherstreckt, und mit zwei das Hülsenteil seitlich begrenzenden Seitenteilen ausgebildet ist, wobei sich zwischen den beiden Seitenteilen vom zentralen Hülsenteil beabstandet ein Stift erstreckt, der zur Festlegung des ersten Befestigungsendes des Federelementes vorgesehen ist. Ein solches Organ ist einfach herstellbar, es dient gleichzeitig in vorteilhafter Weise auch zur Lagerung und Führung des Federelementes zwischen den beiden Seitenteilen, so daß Verkantungen o.dgl. verhindert werden. Hierdurch ergibt sich eine gute Betriebszuverlässigkeit bei einem entsprechend guten Federungsverhalten.

Eine einfache Montage des spulenförmigen Organs an der entsprechenden Querstrebe ist möglich, wenn das spulenförmige Organ aus zwei Spulenhälften besteht, die miteinander und mit der Querstrebe fest verbunden sind. Eine solchermaßen ausgebildete Einrichtung ist - wie ohne weiteres ersichtlich ist - auch zur einfachen Nachrüstung eines entsprechenden Kinder- oder Puppenwagengestells geeignet.

Ein guter Schutz des Federelementes bzw. eine Klemmgefahr durch das Federelement wird mit der erfindungsgemäßen Federungseinrichtung verhindert, wenn sie mit einem Gehäuse ausgebildet ist, das einen Zentralraum aufweist und das die Radachse und die Querstrebe umschließt, wobei der Zentralraum zur Aufnahme des Federelements und des Organs vorgesehen ist. Bei einer solchen Ausbildung der Federungseinrichtung hat es sich als zweckmäßig erwiesen, wenn im Zentralraum des Gehäuses ein Anschlagelement vorgesehen und wenn das spulenförmige Organ zur Begrenzung der Drehbewegung der Querstrebe mit zwei voneinander beabstandeten Gegenanschlägen ausgebildet ist. Durch eine solche Ausbildung der Einrichtung ist es in einfacher Weise möglich, die Schwingbewegung der Querstrebe in Bezug auf die zugehörige Radachse definiert zu begrenzen, so daß ein ungewolltes bzw. unerwünschtes Durchschwingen des Gestells verhindert wird. Das Anschlagelement kann hierbei von einem Stift gebildet sein, der sich durch das Gehäuse hindurcherstreckt und die beiden Seitenteile des spulenförmigen Organs können hierbei jeweils mit einer Aussparung ausgebildet sein, die miteinander in axialer Richtung des spulenförmigen Organs fluchten und deren Flanken die Gegenanschläge für das Anschlagelement bilden. Ein erheblicher Vorteil einer solchermaßen ausgebildeten Federungseinrichtung besteht in deren Reparaturfreundlichkeit, weil es bspw. einfach möglich ist, einen verbogenen oder beschädigten Stift durch einen ungebrauchten neuen in einfacher und zeitsparender Weise zu ersetzen.

Der Reparaturfreundlichkeit ist es außerdem dienlich, wenn bei einer solchen Federungseinrichtung das Gehäuse zwei Gehäusehälften aufweist, welche die Radachse und die Querstrebe einschließen. Ein besonderer Vorteil einer solchermaßen ausgebildeten Federungseinrichtung besteht darin, daß sie gut zur nachträglichen Anbringung an einem Kinder- oder Puppenwagengestell der oben genannten Art geeignet ist.

Es hat sich als zweckmäßig erwiesen, wenn das Federelement eine zylindrische Schraubenzugfeder ist.

Die Schraubenzugfeder ist also mit ihrem Anlageabschnitt zweckmäßigerweise gegen das zentrale Hülsenteil des Organs gezwängt.

Weitere Einzelheiten, Merkmale und Vorteile ergeben sich aus der nachfolgenden Beschreibung eines in der Zeichnung dargestellten Ausführungsbeispieles der erfindungsgemäßen Federungseinrichtung, die zwischen einer Radachse und einer zu dieser parallel vorgesehenen Querstrebe eines Gestellteils eines Kinder- oder Puppenwagengestells vorgesehen ist. Es zeigen:
- Fig. 1: eine Seitenansicht der Federungseinrichtung, die an einer geschnitten gezeichneten Radachse und an einer zu dieser parallel vorgesehenen, geschnitten gezeichneten Querstrebe angeordnet ist,
- Fig. 2: eine Seitenansicht der einen Spulenhälfte eines spulenförmigen Organs der Federungseinrichtung,
- Fig. 3: eine Seitenansicht der zweiten Spulenhälfte des besagten spulenförmigen Organs,
- Fig. 4: eine Ansicht der ersten Spulenhälfte in Blickrichtung des Pfeiles IV in Fig. 2,
- Fig. 5: eine Ansicht der zweiten Spulenhälfte in Blickrichtung des Pfeiles V in Fig. 3,
- Fig. 6: eine Seitenansicht der einen Gehäusehälfte des Gehäuses der Federungseinrichtung gemäß Fig. 1,
- Fig. 7: eine Seitenansicht der zweiten Gehäusehälfte des Gehäuses der Federungseinrichtung gemäß Fig. 1,
- Fig. 8: eine Ansicht der Gehäusehälfte gemäß Fig. 6 in Blickrichtung des Pfeiles VIII von oben, und
- Fig. 9: eine Ansicht der zweiten Gehäusehälfte gemäß Fig. 7 in Blickrichtung des Pfeiles IX, d.h. in Blickrichtung von unten.

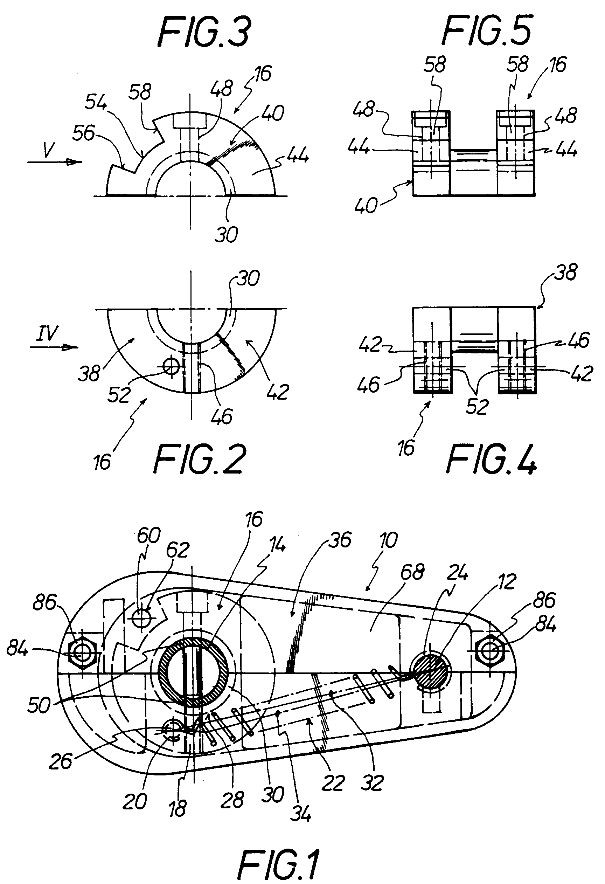

Fig. 1 zeigt in einer Seitenansicht eine Federungseinrichtung 10, die zwischen einer geschnitten gezeichneten Radachse 12 und einer von dieser beabstandeten und zu ihr parallelen, geschnitten gezeichneten Querstrebe 14 eines Gestellteils eines Kinder- oder Puppenwagengestells vorgesehen ist. Die Radachse 12 besteht aus einem Vollprofilmaterial, während die Querstrebe 14 aus Gewichtsersparnisgründen aus einem Rohrprofilmaterial besteht.

Die Federungseinrichtung 10 weist ein Organ 16 auf, das an der Querstrebe 14 bspw. mittels zweier Schrauben 18 befestigt ist. Das Organ 16 wird weiter unten in Verbindung mit den Figuren 2 bis 5 detaillierter beschrieben. Das Organ 16 dient zur Festlegung eines ersten Befestigungsendes 20 eines Federelementes 22, das mit seinem vom ersten Befestigungsende 20 entfernten zweiten Befestigungsende 24 an der Radachse 12 festgelegt ist. Bei dem Federelement 22 handelt es sich um eine zylindrische Schraubenzugfeder, die zwischen der Radachse 12 und einem am Organ 16 vorgesehenen Stift 26 derartig angeordnet ist, daß sie mit einem Anlageabschnitt 28 an einem zentralen Hülsenteil 30 des spulenförmig ausgebildeten Organs 16 derartig anliegt, daß das Federelement 22 aus seiner normalen geradlinigen Ruheposition ausgelenkt ist. Die geradlinige Ruheposition ist in Fig. 1 durch die strichpunktierte Mittellinie 32 angedeutet, während die ausgelenkte, die Federung bewirkende Position des Federelementes 22 durch die abgewinkelte strichpunktierte Mittellinie 34 verdeutlicht ist. Aus Fig. 1 ist auch ersichtlich, daß das Federelement 22 zwischen seinen beiden Befestigungsenden 20 und 24 als zylindrische Schraubenfeder ausgebildet ist. Zweckmäßigerweise kommt eine Schraubenzugfeder zur Anwendung. Das Federelement 22 könnte bspw. auch als Blattfeder o.dgl. ausgebildet sein.

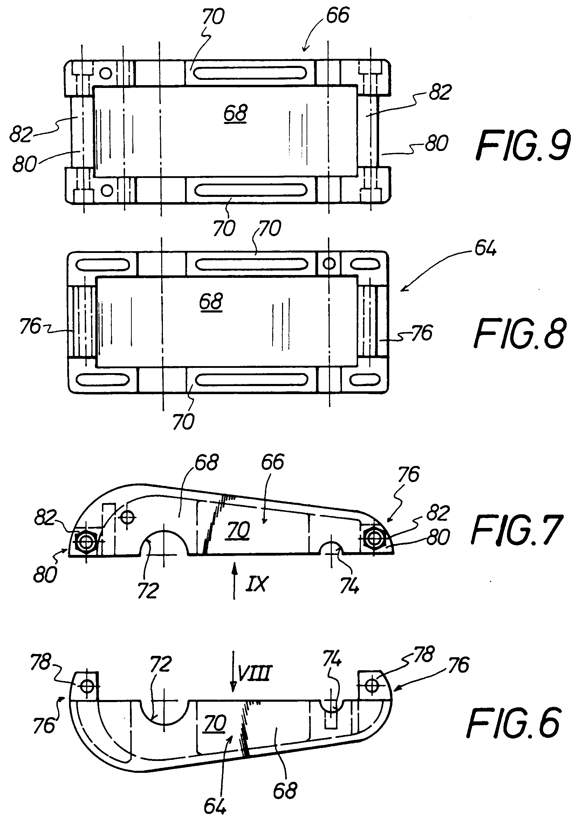

Weitere Einzelheiten des spulenförmigen Organs 16 werden nachfolgend in Verbindung mit den Figuren 2 bis 5, und Einzelheiten des Gehäuses 36 der Federungseinrichtung 10 werden nachfolgend in Verbindung mit den Figuren 6 bis 9 detaillierter beschrieben.

Die Figuren 2 und 4 zeigen eine erste Spulenhälfte 38 des spulenförmigen Organs 16 und die Figuren 3 und 5 zeigen die zweite Spulenhälfte 40 des Organs 16. Die beiden Spulenhälften 38 und 40 werden miteinander und mit der Querstrebe 14 (sh. Fig. 1) z.B. mittels zweier Schrauben 18 fest verbunden. Zu diesem Zweck ist jede Spulenhälfte 38 bzw. 40 an ihren beiden Seitenteile-Hälften 42 und 44 mit durchgehenden Löchern 46 und 48 ausgebildet. Im zusammengebauten Zustand des Organs 16 fluchten die durchgehenden Löcher 46 und 48 der Seitenteile-Hälften 42 und 44 des spulenförmigen Organs 16 miteinander, so daß durch die durchgehenden Löcher 46 und 48 und durch entsprechende Durchgangslöcher 50 in der Querstrebe 14 passende Schrauben 18 durchgesteckt werden können, um das Organ 16 an der Querstrebe 14 zu fixieren.

Die beiden Seitenteile-Hälften 42 der ersten Spulenhälfte 38 des Organs 16 sind mit Löchern 52 ausgebildet, die miteinander axial fluchten und die zur Aufnahme des weiter oben erwähnten Stiftes 26 zur Festlegung des ersten Befestigungsendes 20 des Federelementes 22 dienen.

Die beiden Seitenteile-Hälften 44 der zweiten Spulenhälfte 40 des spulenförmigen Organs 16 sind jeweils mit einer Aussparung 54 ausgebildet, die in axialer Richtung des Organs 16 miteinander fluchten. Die Aussparungen 54 sind durch Flanken 56 und 58 begrenzt, die für ein Anschlagelement 60 (sh. Fig. 1) Gegenanschläge bilden. Das Anschlagelement 60 ist als Stift ausgebildet, der sich durch das Gehäuse 36 hindurcherstreckt. Das Gehäuse 36 ist zu diesem Zweck mit Löchern 62 ausgebildet, die miteinander axial fluchten.

Fig. 6 zeigt die eine Gehäusehälfte 64 und Fig. 7 zeigt die zweite Gehäusehälfte 66 des Gehäuses 36. Wie auch aus den Figuren 8 und 9 deutlich ersichtlich ist, sind die beiden Gehäusehälften 64 und 66 schalenförmig ausgebildet, um im zusammengebauten Zustand einen Zentralraum 68 festzulegen, in welchem sich das Federelement 22 befindet. Die Gehäusehälften 64 und 66 sind an ihren Seitenwänden 70 mit halbkreisförmigen Aussparungen 72 und 74 ausgebildet. Die halbkreisförmigen Aussparungen 72 weisen einen der Querstrebe 14 entsprechenden Radius und die Aussparungen 74 weisen einen der Radachse 12 entsprechenden Radius auf. Die erste Gehäusehälfte 64 ist an ihren beiden voneinander abgewandten Stirnseiten 76 mit Ansätzen 78 ausgebildet, während die beiden Stirnseiten 80 der zweiten Gehäusehälfte 66 mit den Ansätzen 78 entsprechenden Aussparungen 82 ausgebildet sind. Im zusammengebauten Zustand der Gehäusehälften 64 und 66 stehen die Ansätze 78 in die Aussparungen 82 hinein, wobei die Gehäusehälften 64 und 66 bspw. mittels Schrauben 84 und Muttern 86 (sh. Fig. 1) miteinander verbindbar sind.

## Patentansprüche

1. Federungseinrichtung zur Anordnung zwischen einer Radachse (12) und einer zu dieser parallel vorgesehenen Querstrebe (14) eines Gestellteils eines Kinder- oder Puppenwagengestells,
**dadurch gekennzeichnet**,
daß an der Querstrebe (14) ein Organ (16) befestigt ist, das zur Festlegung eines ersten Befestigungsendes (20) eines Federelementes (22) vorgesehen ist, dessen gegenüberliegendes zweites Befestigungsende (24) an der Radachse (12) festgelegt ist, wobei das Federelement (22) derartig vorgesehen ist, daß es mit einem Anlageabschnitt (28) gegen das Organ (16) gezwängt ist und durch das Organ (16) aus seiner normalen Ruheposition ausgelenkt und hierdurch mechanisch gespannt wird.

2. Einrichtung nach Anspruch 1,
**dadurch gekennzeichnet,**
daß das Organ (16) spulenförmig mit einem zentralen Hülsenteil (30), durch das sich die Querstrebe (14) hindurcherstreckt, und mit zwei das Hülsenteil (30) seitlich begrenzenden Seitenteilen ausgebildet ist, wobei sich zwischen den beiden Seitenteilen vom zentralen Hülsenteil (30) beabstandet ein Stift (26) erstreckt, der zur Festlegung des ersten Befestigungsendes (20) des Federelementes (22) vorgesehen ist.

3. Einrichtung nach Anspruch 2,
**dadurch gekennzeichnet,**
daß das spulenförmige Organ (16) aus zwei Spulenhälften (38, 40) besteht, die miteinander und mit der Querstrebe (14) fest verbunden sind.

4. Einrichtung nach einem der vorhergehenden Ansprüche,
**dadurch gekennzeichnet,**
daß ein Gehäuse (36) vorgesehen ist, das mit einem Zentralraum (68) ausgebildet ist und die Radachse (12) und die Querstrebe (14) umschließt, wobei der Zentralraum (68) zur Aufnahme des Federelementes (22) und des Organs (16) vorgesehen ist.

5. Einrichtung nach Anspruch 4,
**dadurch gekennzeichnet**,
daß im Zentralraum (68) des Gehäuses (36) ein Anschlagelement (60) vorgesehen und das Organ (16) zur Begrenzung der Drehbewegung der Querstrebe (14) mit zwei voneinander beabstandeten Gegenanschlägen ausgebildet ist.

6. Einrichtung nach Anspruch 5,
**dadurch gekennzeichnet**,
daß das Anschlagelement (60) von einem Stift gebildet ist, der sich durch das Gehäuse (36) hindurcherstreckt, und daß die beiden Seitenteile (40) des Organs (16) jeweils mit einer Aussparung (54) ausgebildet sind, die miteinander in axialer Richtung des spulenförmigen Organs (16) fluchten und deren Flanken (56, 58) die Gegenanschläge für das Anschlagelement (60) bilden.

7. Einrichtung nach einem der Ansprüche 4 bis 6,
**dadurch gekennzeichnet,**
daß das Gehäuse (36) zwei Gehäusehälften (64, 66) aufweist, welche die Radachse (12) und die Querstrebe (14) einschließen.

8. Einrichtung nach einem der vorhergehenden Ansprüche,
**dadurch gekennzeichnet,**
daß das Federelement (22) eine zylindrische Schraubenzugfeder ist.

9. Einrichtung nach Anspruch 8,
**dadurch gekennzeichnet,**
daß die Schraubenzugfeder (22) mit ihrem Anlageabschnitt (28) gegen das zentrale Hülsenteil (30) des spulenförmigen Organs (16) gezwängt ist.

## Claims

1. A suspension device for arrangement between a wheel axle (12) and a cross strut (14) of a frame part, provided parallel thereto, of a frame of a child's or doll's pram,
characterized in that
an element (16) is secured on the cross strut (14), which is provided for fixing a first fastening end (20) of a spring element (22) whose opposite second fastening end (24) is fixed on the wheel axle (12), in which arrangement the spring element (22) is designed in such a way that it is strained with one bearing section (28) against the element (16), and is deflected by the element (16) out of its normal rest position and is thereby mechanically stressed.

2. A device according to claim 1,
characterized in that
the element (16) is designed in a reel shape with a central bush part (30), through which there extends the cross strut (14), and with two side parts laterally delimiting the bush part (30), in which arrangement, a pin (26) interspaced from the central bush part (30) extends between the two side parts, which pin is provided for fixing the first fastening end (20) of the spring element (22).

3. A device according to claim 2,
characterized in that
the reel-shaped element (16) consists of two reel halves (38, 40) which are rigidly connected to each other and to the cross part (14).

4. A device according to one of the preceding claims,
characterized in that
a casing (36) is provided which is designed with a central space (68) and surrounds the wheel axle (12) and the cross strut (14), in which arrangement the central space (68) is provided for receiving the spring element (22) and the element (16).

5. A device according to claim 4,
characterized in that
a stop element (60) is provided in the central space (68) of the casing (36), and the element (16) is designed with two counter-stops interspaced from each other for limiting the rotational movement of the cross strut (14).

6. A device according to claim 5,
characterized in that
the stop element (60) is formed by a pin which extends through the casing (36), and that the two side parts (40) of the element (16) are each designed with a recess (54) which are aligned with each other in the axial direction of the reel-shaped element (16) and whose flanks (56, 58) form the counterstops for the stop element (60).

7. A device according to one of claims 4 to 6,
characterized in that
the casing (36) has two casing halves (64, 66) which surround the wheel axle (12) and the cross strut (14).

8. A device according to one of the preceding claims,
characterized in that
the spring element (22) is a cylindrical helical tension spring.

9. A device according to claim 8,
characterized in that
the helical tension spring (22) is strained against the central bush part (30) of the reel-shaped element (16).

## Revendications

1. Dispositif de rappel destiné à être disposé entre un axe de roues (12) et une traverse (14), parallèle audit axe, d'une partie de châssis d'une voiturette d'enfant ou de poupée, caractérisé en ce que ladite traverse comporte un organe (16) qui lui est fixé, prévu pour attacher une première extrémité (20) d'un élément ressort (22), dont l'extrémité opposée (24) est attachée à l'axe de roue (12), de sorte que l'élément ressort (22) comporte une portion (28) au contact et contrainte contre l'organe (16), et qui peut être conduite par ce dernier de sa position de repos normale à une position de tension mécanique.

2. Dispositif selon la revendication 1, caractérisé en ce que l'organe (16) est en forme de bobine, avec un fourreau central (30) à travers lequel passe la traverse (14), ledit organe étant composé de deux parties latérales limitant de chaque côté le fourreau (30), une goupille (26) s'étendant entre lesdites parties latérales, à distance du fourreau central (30), afin de fixer la première extrémité (20) de l'élément ressort (22).

3. Dispositif selon la revendication 2, caractérisé en ce que l'organe en forme de bobine (16) est composé de deux demies bobines (38, 40), qui sont fixées ensemble et à la traverse (14).

4. Dispositif selon l'une quelconque des revendications précédentes, caractérisé en ce qu'un carter (36) est prévu, comportant un espace central (68), renfermant l'axe de la roue (12) et la traverse (14), ledit espace central (68) permettant au surplus de loger l'élément ressort (22) et l'organe (16).

5. Dispositif selon la revendication 4, caractérisé en ce que le carter (36) comporte dans ledit espace central (68) un élément de butée (60), et en ce que l'organe (16) est doté de deux contrebutées distantes l'une de l'autre permettant de limiter le mouvement rotatif de la traverse (14).

6. Dispositif selon la revendication 5, caractérisé en ce que l'élément de butée (60) est une goupille qui traverse le carter (36), et en ce que les deux parties latérales (40) de l'organe (16) sont chacune dotées d'un évidement (54), alignées l'un avec l'autre dans la direction axiale de l'organe en forme de bobine (16), et dont les côtés (56, 58) constituent les contrebutées coopérant avec l'élément de butée (60).

7. Dispositif selon l'une des revendications 4 à 6, caractérisé en ce que le carter (36) comporte deux demis carters (64, 66) destinés à enclore l'axe de la roue (12) et la traverse (14).

8. Dispositif selon l'une quelconque des revendications précédentes, caractérisé en ce que l'élément ressort (22) est un ressort de traction à boudin cylindrique.

9. Dispositif selon la revendication 8, caractérisé en ce que le ressort à boudin cylindrique (22) est en contrainte contre le fourreau central (30) de l'organe en forme de bobine (16) au niveau de sa portion d'extrémité (28).
